# FASCICULE DE BREVET EUROPEEN

(11) **EP 2 984 046 B1**
(45) Date de publication et mention de la délivrance du brevet: **24.06.2020**
(21) Numéro de dépôt: 14715621.0
(22) Date de dépôt: 08.04.2014
(51) Int. Cl.: C02F 9/00, C02F 1/44, C02F 1/28, C02F 101/32, C02F 101/34, C02F 101/10, C02F 103/36

(54) **PROCEDE DE TRAITEMENT D'EAUX INDUSTRIELLES PAR SEPARATION PHYSIQUE, ADSORPTION SUR RESINE ET OSMOSE INVERSE, ET INSTALLATION CORRESPONDANTE**
VERFAHREN UND ZUGEHÖRIGE ANLAGE ZUR BEHANDLUNG VON INDUSTRIELLEN WÄSSERN MIT HILFE VON PHYSIKALISCHER ABTRENNUNG, ADSORPTION AUF HARZ UND UMKEHROSMOSE
PROCESS AND INSTALLATION FOR TREATING INDUSTRIAL WATER BY MEANS OF PHYSICAL SEPARATION, ADSORPTION ON RESIN ET REVERSE OSMOSIS

(30) Priorité: 10.04.2013 FR 1353216; 19.04.2013 FR 1353580; 05.12.2013 FR 1362206
(43) Date de publication de la demande: 17.02.2016
(73) Titulaire: Veolia Water Solutions & Technologies Support, 94417 Saint-Maurice Cedex (FR)
(72) Inventeur: HENDOU, Mouloud, F-78660 Prunay en Yvelines (FR); SAGNE, Camille, F-92130 Issy les Moulineaux (FR)
(74) Mandataire: Vidon Brevets & Stratégie
(86) Numéro de dépôt international: PCT/EP2014/057013
(87) Numéro de publication internationale: WO 2014/166929

(56) Documents cités:
- EP-A1- 0 432 787
- EP-A1- 0 901 805
- EP-A1- 2 177 479
- WO-A1-94/14513
- US-A- 5 236 594
- US-A1- 2010 264 068
- US-A1- 2011 089 013
- US-A1- 2012 137 883
- US-A1- 2013 168 315
- US-B1- 7 520 993
- US-B1- 7 731 854

## Description

### 1. Domaine de l'invention

Le domaine de l'invention est celui du traitement des effluents industriels, notamment ceux qui présentent une température relativement élevée.

Plus précisément, l'invention concerne notamment le traitement des eaux usées chaudes provenant des industries du gaz et du pétrole ou pétrochimiques, telles que les installations de production des champs pétroliers et/ou gaziers ou encore les raffineries.

### 2. Art antérieur

Le recyclage de l'eau à partir des effluents industriels est une problématique majeure à laquelle de nombreuses recherches ont été consacrées cette dernière décennie.

Cette problématique est particulièrement sensible dans l'industrie du gaz et du pétrole où l'on recherche à réutiliser, après traitement, les eaux de production des champs pétroliers et gaziers ou encore les eaux utilisées dans le cadre du raffinage des produits pétroliers. En effet, notamment, sur les sites d'extraction de pétrole ou de gaz, l'eau est souvent rare et coûteuse.

De telles eaux industrielles présentent toutefois la particularité d'avoir une température pouvant être élevée, en pratique pouvant être supérieure à environ 55 °C et pouvant monter dans certains cas jusqu'à 98 °C, et d'être chargées en matières organiques. Ces eaux peuvent ainsi contenir des matières en suspensions (MES), des hydrocarbures et des huiles insolubles, de la matière organique soluble. Elles peuvent encore présenter une alcalinité et une dureté élevées, une certaine salinité et contenir de la silice et du Bore.

Une des applications de recyclage de ces eaux industrielles consiste à produire de la vapeur au sein de chaudière.

Compte tenu de leur composition, ces eaux sont toutefois impropres à être réutilisées, par exemple dans ce cadre, sans être préalablement traitées.

Les procédés actuellement mis en œuvre pour le traitement de telles eaux industrielles font appel à des techniques mettant successivement en œuvre :
- une filtration, par exemple de type microfiltration ou ultrafiltration, sur membranes en céramique ;
- un traitement biologique ;
- une filtration par osmose inverse.

La filtration sur membrane céramique permet d'abattre la teneur de ces eaux industrielles en hydrocarbures et huiles insolubles. Le traitement biologique permet d'abattre la teneur de ces eaux en matière organique soluble. La filtration par osmose inverse permet quant à elle d'abattre l'alcalinité, la dureté, la salinité et la teneur en silice et en Bore de ces eaux.

Une filtration sur charbon actif peut être mise en œuvre entre le traitement biologique et l'osmose inverse en tant que traitement de finition pour l'élimination de la matière organique soluble.

Les procédés de traitement de ce type permettent de réduire la teneur en polluants des eaux industrielles. Ils présentent toutefois des limites en termes de performances, d'opérabilité et de coût d'exploitation.

Compte tenu de la température élevée de ces eaux industrielles, l'étape de micro ou d'ultrafiltration suppose la mise en œuvre de membranes en céramique, l'intégrité des membranes de filtration organiques étant susceptible d'être altérée par de telles températures.

Toutefois, les membranes céramiques sont coûteuses à l'achat et à l'entretien. Lorsque le débit d'effluent à traiter est élevé, le nombre d'unités de filtration membranaires utilisées doit l'être aussi, ce qui augmente les coûts d'investissement et d'exploitation.

De plus, les revêtements céramiques (TiO₂, CSi) de ces membranes peuvent catalyser certaines réactions d'oxydation de la matière organique, ou de la combinaison de certains composés organiques, à des métaux disponibles dans ces eaux, donnant lieu à la formation de composés organo-métalliques. Ces composés constituent des sources de colmatage des membranes céramiques et conduisent, en pratique, à une augmentation de leur fréquence de nettoyage.

Par ailleurs, de telles eaux peuvent présenter une dureté élevée résultant notamment de teneurs importantes en éléments alcalino-terreux, principalement en calcium et/ou en magnésium. Cette dureté élevée, combinée aux vitesses de passage interfaciales élevées, en pratique généralement comprises entre 1,5 et 5 m/s, nécessaires pour le fonctionnement de ces membranes, peut provoquer une érosion prématurée de ces membranes et, corollairement, la nécessité d'anticiper leur remplacement.

Par ailleurs, la mise en œuvre de l'étape traitement biologique pour l'élimination de la matière organique soluble nécessite un refroidissement préalable des eaux pour les rendre compatibles avec ce type de traitement. Or, les équipements de refroidissement augmentent d'une manière globale la taille des installations et, corollairement, les investissements. De plus, un tel refroidissement peut conduire à un bilan énergétique négatif du traitement. Ceci est d'autant plus vrai qu'il existe un intérêt à réutiliser les eaux traitées dans le cadre des procédés dont elles sont issues, notamment pour produire de la vapeur d'extraction. En effet, ces sites se trouvent souvent en des endroits où l'eau est rare et donc chère. Refroidir des eaux destinées, après traitement, à être réchauffées pour pouvoir être ré-utilisées sous forme, par exemple de vapeur, impacte donc de façon négative le bilan énergétique.

On notera également que le traitement biologique génère des boues dont la quantité est proportionnelle au débit d'effluents traité et à la concentration en matière organique contenue dans ceux-ci. Ces boues constituent un déchet dont le traitement implique une problématique économique et technique.

Enfin, les membranes d'osmose inverse classiquement mises en œuvre ne doivent pas être exposées en continu à des températures supérieures à 42°C avec des pics à 45°C sous peine de perdre leur intégrité mécanique. Un refroidissement des eaux doit donc également être mis en œuvre préalablement à la filtration par osmose inverse causant les mêmes inconvénients que ceux inhérents au refroidissement préalable au traitement biologique.

En résumé, ces techniques de traitement sur membranes céramiques, traitement biologique puis osmose inverse présentent un intérêt limité dans le cadre du traitement des eaux industrielles, notamment des eaux chaudes de production des champs pétroliers et gaziers.

US 7 731 854 B décrit la mise en œuvre d'un traitement sur charbon actif en grains en amont d'une filtration par osmose inverse.

US 5 236 594 A enseigne que des résines polymériques réticulées non ioniques permettent d'éliminer des contaminants organiques.

### 3. Objectifs de l'invention

L'invention a notamment pour objectif d'apporter une solution efficace à au moins certains de ces différents problèmes.

En particulier, un objectif de la présente invention est de proposer un procédé amélioré de traitement des effluents aqueux industriels, notamment ceux provenant des industries du gaz et du pétrole ou pétrochimiques, telles que les installations de production des champs pétroliers et/ou gaziers ou encore les raffineries, pouvant avoir une température élevée.

Notamment, un objectif de la présente invention est de présenter un tel procédé qui, dans au moins un mode de réalisation, permet d'améliorer le taux de conversion des unités de filtration par osmose inverse, c'est-à-dire d'augmenter le pourcentage d'eau réutilisable, produite sous forme de perméat par ces unités, par rapport aux eaux les alimentant, tout en réduisant parallèlement les volumes de concentrat d'osmose inverse.

Encore un objectif de la présente invention est de divulguer un tel procédé qui, dans au moins un mode de réalisation, permet d'augmenter la durée de vie des membranes d'osmose inverse.

Notamment, un objectif de la présente invention est de décrire un tel procédé qui, dans au moins un mode de réalisation, permet de réduire les coûts des procédés existants mettant en œuvre une filtration sur membranes céramiques, tout en présentant des performances au moins semblables à ceux-ci.

Encore un objectif de la présente invention est de décrire un tel procédé qui, dans au moins un mode de réalisation, permet de réduire la fréquence de lavage des membranes mises en œuvre, conduisant ainsi à des économies de réactifs de lavage et à la réduction des coûts de traitement des eaux de lavage souillées.

Encore un autre objectif de la présente invention est de proposer un tel procédé qui, dans au moins un mode de réalisation, permet de récupérer les polluants contenues dans les eaux, permettant ainsi de réutiliser ceux-ci sous forme de produits.

Un autre objectif de la présente invention est de divulguer une installation pour la mise en œuvre d'un tel procédé.

### 4. Présentation de l'invention

Au moins certains de ces objectifs, et d'autres éventuels qui apparaitront par la suite, sont atteints grâce à la présente invention qui concerne un procédé de traitement d'eaux industrielles, ledit procédé comprenant :
- une étape de séparation physique produisant des déchets et un effluent;
- une étape d'adsorption d'au moins une partie de ladite matière organique présent dans ledit effluent sur au moins une résine adsorbante choisie dans le groupe comprenant les résines réticulées non ionisées et les résines charbonnées microporeuses ;
- une étape de filtration par osmose inverse en aval de ladite étape d'adsorption.

La présente invention propose donc un procédé de traitement d'eaux industrielles combinant une séparation physique, une adsorption sur résines et une osmose inverse.

Ainsi, l'invention propose un procédé de traitement ne mettant pas en œuvre d'étape de traitement biologique, et donc sans boues résultant d'un tel traitement.

Selon l'invention, l'utilisation de résines adsorbantes non ionisées (ce qui exclut les résines échanges d'ions) se présentant sous forme de résines polymériques réticulées non ionisées et/ou de résines charbonnées microporeuses permet d'assurer la protection des membranes d'osmose inverse vis-à-vis des matières organiques contenues dans les eaux industrielles provenant des industries du pétrole, du gaz et pétrochimiques, notamment des eaux de production des champs pétroliers et gaziers.

La présente invention permet d'opérer à des débits d'eaux à traiter faibles ou forts, quelle que soit la concentration des composés organiques néfastes aux membranes d'osmose inverse présents dans celles-ci.

La présente invention permet d'abattre efficacement la pollution en composés insolubles, en matières en suspension, et en matières organiques solubles, ainsi que la dureté, l'alcalinité, la salinité et la teneur en silice et Bore des eaux industrielles de manière efficace ce qui rend ces eaux traitées propres à être ultérieurement utilisées dans le cadre de diverses utilisations industrielles, notamment comme eaux d'alimentation de chaudière pour produire de la vapeur.

La technique selon l'invention permet ainsi d'améliorer le traitement des eaux industrielles.

Lesdites eaux pourront être des effluents industriels chauds présentant une température supérieure à 55°C et inférieure ou égale à 98°C.

Dans un mode de réalisation avantageux, ladite étape de séparation physique est une filtration membranaire.

Dans ce cas, ladite filtration membranaire est préférentiellement de type microfiltration ou ultrafiltration menée sur au moins une membrane choisie dans le groupe constitué par les membranes immergées ou sous pression en polyétrafluoroéthylène (PTFE) et les membranes tubulaires en polyfluorure de vinylidène (PVDF).

Ladite étape d'osmose inverse est préférentiellement menée sur au moins une membrane en composite polyamide.

De telles membranes de microfiltration ou d'ultrafiltration, et d'osmose inverse présentent l'avantage de ne pas voir leurs performances se dégrader du fait de la température élevée des eaux traitées. Les résines adsorbantes sélectionnées dans le cadre du procédé selon l'invention, ne voient pas non plus leurs performances se dégrader du fait de la température élevée des eaux à traitées. La technique selon l'invention ne nécessite donc pas la mise en œuvre d'une étape de refroidissement des effluents chauds que ce soit en amont de l'adsorption sur résines qu'en amont de l'osmose inverse.

Du fait que le procédé selon l'invention ne nécessite pas de refroidir les eaux à traiter, le bilan énergétique de celui-ci est amélioré par rapport aux procédés de l'art antérieur qui mettent en œuvre un refroidissement en amont du traitement biologique et/ou en amont de l'osmose inverse.

Un procédé selon l'invention pourra notamment être mis en œuvre pour assurer le traitement d'eaux qui proviennent des industries pétrolières ou gazières, telles que par exemple des eaux de production des champs pétroliers ou gaziers.

Sur les champs pétroliers ou gaziers, l'eau est très généralement rare et chère. Une préoccupation constante des exploitants de ces sites est de limiter la consommation d'eau, notamment en réutilisant les eaux industrielles dépolluées.

Ainsi, dans ce cas comme possiblement dans d'autres, le procédé selon l'invention inclut de plus une étape de récupération desdites eaux à l'issue de ladite étape d'osmose inverse en vue de leur ré-utilisation industrielle.

Dans la pratique, ces eaux industrielles présentent généralement avant traitement :
- une concentration en hydrocarbures insolubles comprise entre 1 et 3 000 mg/L ;
- une concentration en matières en suspension comprise entre 90 et
- 500 mg/L.

Elles présentent aussi généralement une concentration en matière organique soluble comprise entre 10 et 8 000 mg/L.

Elles présentent encore généralement :
- une salinité comprise entre 500 et 37 000 mg/L ;
- une concentration en silice comprise entre 20 et 250 mg/L ;
- une concentration en Bore comprise entre 1 et 80 mg/l
- une alcalinité comprise entre 80 et 1 000 mg/L de CaCO₃ ;
- une dureté comprise entre 20 et 50 000 mg/L de CaCO₃.

De façon générale, la technique selon l'invention peut notamment s'appliquer au traitement d'eaux chaudes contenant des hydrocarbures insolubles, des matières en suspension, de la matière organique soluble, de la salinité, de l'alcalinité, de la dureté, de la silice et du Bore.

Selon un mode de réalisation avantageux, ladite étape d'adsorption est mise en œuvre sur une résine spécifique dédiée à l'élimination d'un composé cible.

Selon un autre mode de réalisation avantageux, ladite étape d'adsorption est mise en œuvre sur deux ou plusieurs résines permettant l'élimination d'un ou de plusieurs composés.

Le choix de la ou des résines adsorbantes sera fait en fonction de la nature et de la concentration en polluant(s) présent(s) dans les effluents à traiter.

Préférentiellement, un procédé selon l'invention comprend une étape de régénération *in situ* de ladite au moins une résine.

Avantageusement, ladite étape de régénération est réalisée par un média de régénération choisi dans le groupe constitué par de la vapeur d'eau surchauffée à une température comprise entre 120°C et 200° C, préférentiellement entre 120 °C et 150 °C, un solvant à faible point d'ébullition, une base, un acide, ou par la combinaison de deux ou plusieurs de ces médias de régénération.

Selon une variante, ledit média de régénération est un solvant à faible point d'ébullition, tel que de l'alcool, et en ce qu'il comprend de plus une étape ultérieure de recyclage dudit solvant par évaporation conduisant à l'obtention de deux phases :
- une phase condensée constituée de solvant régénéré apte à être réutilisé lors d'une étape ultérieure de régénération *in situ* de ladite au moins une résine, et
- une phase organique constituée des matières organiques adsorbées.

Selon une autre variante, ledit média de régénération est de la vapeur d'eau, et en ce qu'il comprend de plus une étape ultérieure de condensation de ladite vapeur d'eau conduisant à l'obtention de deux phases :
- une phase aqueuse constituée d'eau saturée en composés organiques, et
- une phase organique constituée des matières organiques adsorbées.

Dans ce cas, le procédé comprend en outre préférentiellement une étape de traitement de ladite phase aqueuse constituée d'eau saturée en composés organiques consistant à la faire passer sur ladite au moins une résine adsorbante de façon à la dé-saturer en composés organiques et conduisant à une eau apte à être réutilisée lors d'une étape ultérieure de régénération *in situ* de ladite au moins une résine.

Lorsque lesdites eaux industrielles traitées grâce au procédé selon l'invention sont des eaux de production des champs pétroliers et/ou gaziers, ladite phase organique constituée des matières organiques adsorbées obtenue lors de la régénération de la résine est constituée de pétrole et de matières organiques diverses telles que du benzène, toluène, xylène, éthylbenzène et styrène qui peuvent ainsi être récupérés. L'invention permet alors la récupération des composés organiques comme produits, ce qui n'était pas permis par l'art antérieur.

Les déchets provenant de la séparation physique, en particulier le perméat provenant de la microfiltration ou de l'ultrafiltration, contiennent les hydrocarbures et les huiles insolubles contenus initialement dans les eaux industrielles.

Ainsi, un procédé selon l'invention comprend préférentiellement une étape de récupération de ces déchets en vue d'être valorisés comme produit.

La présente invention concerne également une installation de traitement d'eaux pour la mise en œuvre d'un procédé selon l'une quelconque des variantes exposées plus haut.

Une telle installation comprend :
- des moyens d'amenée d'eaux industrielles ;
- des moyens de séparation physique comprenant une entrée reliée aux moyens d'amenée, et une sortie d'évacuation d'effluent et une sortie d'évacuation de déchets ;
- au moins une colonne logeant au moins une résine adsorbante choisie dans le groupe comprenant les résines réticulées non ionisées et les résines charbonnées microporeuses, ladite colonne comprenant une entrée reliée à la sortie d'évacuation d'effluent desdits moyens de séparation et une sortie d'eaux ;
- au moins une unité de filtration par osmose inverse comprenant une entrée reliée à la sortie d'eaux de ladite colonne et une sortie d'eaux traitées.

Lesdits moyens de séparation physique comprennent préférentiellement au moins une membrane de filtration de type microfiltration ou ultrafiltration choisie dans le groupe constitué par les membranes immergées ou sous pression en polyétrafluoroéthylène (PTFE) et les membranes tubulaires en polyfluorure de vinylidène (PVDF).

Selon un mode de réalisation avantageux, une installation selon l'invention comprend des moyens de régénération de ladite au moins une résine, à l'aide d'au moins un média de régénération choisi dans le groupe constitué par de la vapeur d'eau surchauffée à une température comprise entre 120°C et 200° C, préférentiellement entre 120 °C et 150 °C, un solvant à faible point d'ébullition, une base, un acide, ou par la combinaison de deux ou plusieurs de ces médias de régénération.

Selon une variante avantageuse, une telle installation comprend des moyens de recyclage par évaporation/condensation dudit solvant après son passage sur ladite au moins une colonne.

Selon une autre variante avantageuse, comprend des moyens de condensation de la vapeur d'eau après sont passage sur ladite au moins une colonne, des moyens d'acheminement de la phase aqueuse ainsi obtenue en tête de ladite colonne, et des moyens de récupération en pied de celle-ci d'une eau susceptible d'être chauffée pour donner de la vapeur de régénération.

### 5. Liste des figures

D'autres caractéristiques et avantages de l'invention apparaîtront à la lecture de la description suivante de modes de réalisation particuliers, donnée à titre de simple exemple illustratif et non limitatif, et des dessins annexés parmi lesquels :
- la figure 1 illustre un schéma simplifié d'un exemple d'installation selon l'invention ;
- la figure 2 illustre un exemple de mode de réalisation détaillé d'une installation selon l'invention.

### 6. Description de modes de réalisation particuliers

L'invention, ainsi que les différents avantages qu'elle présente, seront mieux compris, grâce à la description qui suit d'un mode de réalisation selon celle-ci, donné à titre illustratif et non limitatif.

### 6.1. Installation

### 6.1.1. Architecture générale

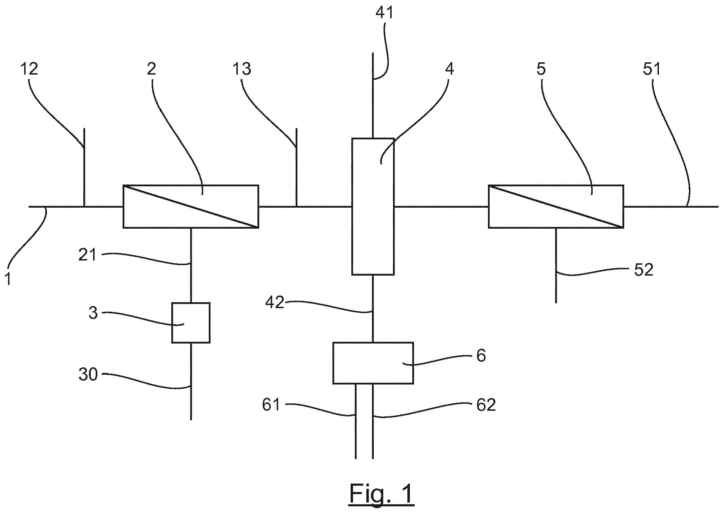

La figure 1 illustre l'architecture générale d'une installation de traitement selon l'invention.

Ainsi que cela est représenté sur cette figure 1, une telle installation comprend des moyens d'amenée 1, comme une canalisation, d'eaux polluées à traiter vers une unité de séparation physique 2.

Cette unité de séparation physique 2 peut comprendre un ou plusieurs modules de filtration membranaire de type microfiltration ou ultrafiltration montés en cascade. Les membranes de ces modules, disponibles dans le commerce, sont de type immergées ou sous pression en polyétrafluoroéthylène (PTFE) ou tubulaires en polyfluorure de vinylidène (PVDF).

Dans des variantes, cette unité de séparation physique pourra par exemple comprendre des tubes refermant les membranes de filtration, ces tubes peuvent être polymérique (polychlore de vinyl), composites ou métalliques, des pompes pour alimentation et des pompes de nettoyage.

Cette unité de séparation physique 2 conduit à la mise en œuvre d'une étape de séparation permettant l'élimination des matières en suspension et des hydrocarbures insolubles dans l'eau, en pratique des huiles libres, contenues dans les effluents qui sont évacués au moyen d'une sortie de déchets 21. Ces déchets sont envoyés vers une zone de traitement 3 par chauffage et centrifugation afin de récupérer les hydrocarbures insolubles séparés de l'eau. Ces hydrocarbures sont récupérés avec un rendement de 95 % sous forme valorisables par la canalisation 30.

L'installation inclut par ailleurs des moyens d'amenée 12 et des moyens d'évacuation 13 d'une solution de réactif de lavage *in situ* de l'unité de séparation physique 2.

Les effluents provenant de l'unité de séparation physique 2 sont dirigés vers au moins une colonne 4 renfermant au moins une résine adsorbante choisie dans le groupe comprenant les résines réticulées non ionisées et les résines charbonnées microporeuses. L'étape de traitement par adsorption sur résine permet d'éliminer la matière organique soluble initialement présente dans les eaux à traiter.

Après avoir transitées dans la colonne 4, les eaux sont acheminées vers au moins une unité de filtration par osmose inverse 5.

L'installation comprend des moyens de régénération des résines. Ces moyens de régénération comprennent des moyens d'injection 41, comme une canalisation ou un injecteur, de vapeur d'eau et/ou de solvant dans la colonne 4. Grâce à de tels moyens, les matières adsorbées sur les résines peuvent être détachées de celles-ci.

Lorsque l'étape de régénération est effectuée grâce à un solvant, le solvant chargé en matières organique peut, en tout ou partie, être récupéré à la sortie de la colonne 4 par la canalisation 42 afin de subir une évaporation au sein d'un évaporateur 6 conduisant à l'obtention de deux phases : une phase condensée, constituée de solvant régénéré recyclé, évacuée par une canalisation 61, et une phase organique constituée des matières organiques adsorbées évacuée par une canalisation 62.

Lorsque l'étape de régénération est effectuée avec de la vapeur, celle-ci peut être évacuée après condensation par la canalisation 42, la condensation conduisant à l'obtention de deux phases : une phase aqueuse constituée d'eau saturée en composés organiques, et une phase organique constituée des matières organiques adsorbées. La phase aqueuse peut ensuite être passée sur la colonne de résine adsorbante de façon à la dessaturer en composés organiques, ceci conduisant à une eau apte à être réutilisée pour faire de la vapeur lors d'une étape ultérieure de régénération *in situ* de des résines.

L'unité de filtration par osmose inverse 5 comprend des membranes en composite polyamide (de type spiralé à faible colmatage, acceptant des pressions allant jusqu'à 41 bar). Elles présentent l'avantage d'avoir un faible colmatage et de pouvoir résister à des températures allant jusqu'à 85°C. Cette unité pourra comprendre plusieurs passes (filtration du perméat provenant de l'unité d'osmose inverse à travers celle-ci) ou plusieurs étages (plusieurs unités d'omsose inverse montées en cascades : le concentrat provenant de l'une étant filtré dans la suivante). L'eau traitée provenant de l'unité de filtration par osmose inverse est recueillie par la canalisation 51 alors que les déchets en provenant sont évacués par la canalisation 52. L'étape d'osmose inverse permet d'abattre l'alcalinité, la salinité, la dureté, la silice et le Bore.

### 6.1.2. Exemple d'une mode de réalisation

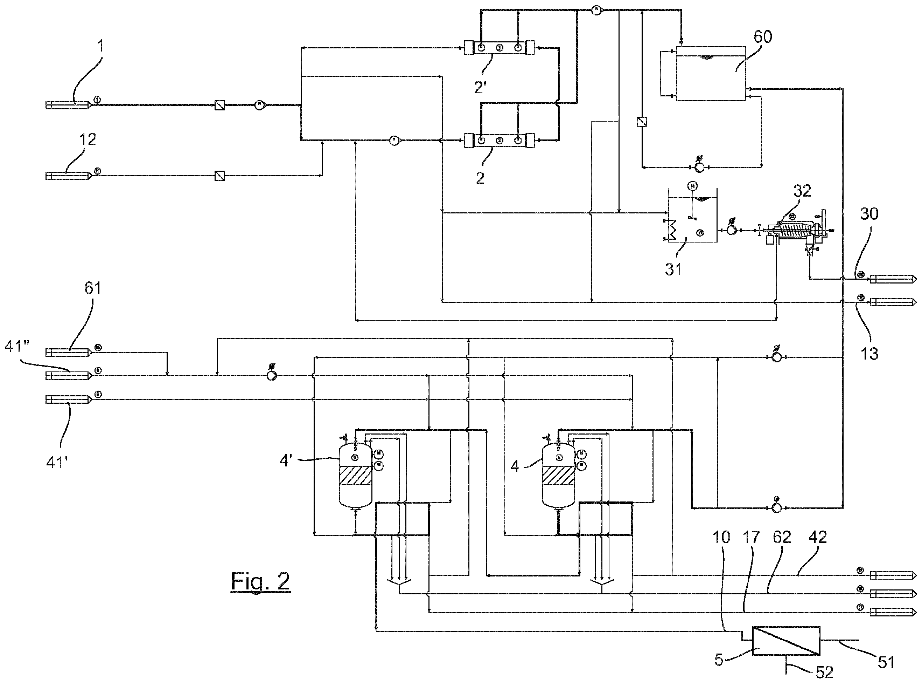

Le mode de réalisation, décrit en référence à la figure 2, représente une vue schématique d'une installation pilote mettant en œuvre un procédé selon l'invention pour le traitement d'eaux de production de champs pétroliers.

L'installation pilote comprend des moyens d'amenée 1 d'eaux polluées à traiter vers une unité de séparation physique par ultrafiltration mettant ici en œuvre deux modules membranaires d'ultrafiltration 2, 2' montés en cascade. Les membranes de ces modules, disponibles dans le commerce, sont en polyfluorure de vinylidène (PVDF). Elles sont fixées à un empotage en polyester et le diamètre moyen de leurs pores est de 30 nm. Cette unité de filtration permet l'élimination des matières en suspension et des hydrocarbures insolubles dans l'eau, en pratique des huiles libres, contenues dans les effluents.

La récupération des hydrocarbures insolubles arrêtés par les membranes est réalisée par séparation des matières accumulées sur l'interface des membranes, correspondant au concentrât, chauffage et centrifugation. Le chauffage est effectué dans une cuve 31 et la centrifugation dans une centrifugeuse 32. Ces hydrocarbures sont récupérés avec un rendement de 95 % sous forme valorisable par la canalisation 30.

L'installation pilote inclut par ailleurs des moyens d'amenée 12 et des moyens d'évacuation 13 d'une solution de réactif de lavage *in situ* des membranes d'ultrafiltration.

Après avoir subi cette étape d'ultrafiltration, les effluents sont dirigés, dans le cas de l'exemple, vers un réservoir tampon facultatif 60 puis dirigés vers deux colonnes montées en série 4, 4' renfermant deux résines spécifiques.

La première colonne 4 renferme une résine polymérique réticulée non ionisée (résine 1) disponible dans le commerce et sélectionnée pour sa capacité à adsorber les composés aromatiques tels que les BTEX (Benzène, Toluène, Ethylbenzène, Xylène) et les composés polycycliques tels les HAP (ex : naphtalène) ; les caractéristiques de cette résine sont données dans le tableau 1 ci-après :

**Tableau 1**

| **Propriétés physiques et chimiques** | |
|---|---|
| Forme ionique | neutre |
| Groupe fonctionnel | aucun |
| Matrice | Polystyrène réticulé |
| Structure | Billes poreuses |
| Coefficient d'uniformité | 1,1 max |
| Taille moyenne des billes | 0,44 à 0,54 mm |
| Masse volumique apparente | 600 g/l |
| Capacité de rétention d'eau | 600 g/kg résine + /- 5% |
| Surface spécifique (méthode BET) | 800 m²/ g environ |
| Volume de pores | 1,2 cm³/g environ |
| Diamètre moyen des pores | 5 à 10 nm |
| Stabilité au pH | 0 à 14 |
| Stabilité à la température | -20 °C à 120 ° C |

La seconde colonne 4' renferme une résine charbonnée microporeuse (résine 2), également disponible dans le commerce, sélectionnée pour son aptitude à fixer plus avantageusement des composés à l'état de traces. Les caractéristiques de cette résine sont données dans le tableau 2 ci-après :

**Tableau 2**

| **Propriétés physiques et chimiques** | |
|---|---|
| Forme ionique | neutre |
| Groupes fonctionnels | aucun |
| Matrice | carbone |
| Granulométrie | 0,4 à 0,8 mm (>90%) |
| Masse volumique apparente | 550 à 650 g/l +/- 5 % |
| Surface spécifique (Methode BET) | 1200 m²/g environ |
| Volume des pores | 0,15 cm³/g environ |
| Diamètre moyes des pores | 8 nm |
| Stabilité à la température | -20 °C à 300 °C |

Après avoir transité successivement dans les colonnes 4 et 4', les eaux sont acheminées vers une unité de filtration par osmose inverse 5.

L'installation pilote comprend des moyens de régénération des résines, soit par de la vapeur d'eau, soit par un solvant. Ces moyens de régénération comprennent des canalisations d'amenée de vapeur 41' et/ou de solvant 41" débouchant sur les colonnes 4, 4'. Grâce à de tels moyens, les matières adsorbées sur les résines peuvent être détachées de celles-ci.

Lorsque la régénération est effectuée grâce à un solvant, le solvant chargé en matières organique peut, en tout ou partie, être récupéré à la sortie des colonnes par la canalisation 42 afin de subir une évaporation conduisant à l'obtention de deux phases : une phase condensée, constituée de solvant régénéré recyclé, et ramenée à la canalisation 61 débouchant dans la canalisation 41", et une phase organique constituée des matières organiques adsorbées, évacuée par une canalisation 62. Lorsque la régénération est effectuée avec de la vapeur, celle-ci peut être évacuée après condensation par la canalisation 17, la condensation conduisant à l'obtention de deux phases : une phase aqueuse constituée d'eau saturée en composés organiques, et une phase organique constituée des matières organiques adsorbées. La phase aqueuse peut ensuite être passée sur la première colonne de résine adsorbante de façon à la dessaturer en composés organiques, ceci conduisant à une eau apte à être réutilisée pour faire de la vapeur lors d'une étape ultérieure de régénération in situ des résines.

Les caractéristiques de l'eau de production d'un champ pétrolier traitée grâce à l'installation décrite ci-dessus sont exposées dans le tableau 3 ci-après.

**Tableau 3**

| **Paramètres** | **Unité** | **Gamme de Valeur** |
|---|---|---|
| Température | °C | 20 - 70 |
| pH | upH | 6,5 - 7,5 |
| Chlorure | mg/L | 2500 - 5000 |
| Sulfate | mg/L | 500 - 2000 |
| Alcalinité | ppm CaCO₃ | 500 - 2000 |
| Sodium | mg/L | 1500 - 3500 |
| Calcium | mg/L | 200 - 2000 |
| Magnésium | mg/L | 50 - 300 |
| Sels Dissous | mg/L | 5000 - 10000 |
| Benzène | mg/L | 1 - 30 |
| Toluène | mg/L | 1 - 30 |
| Ethylbenzène | mg/L | 1 - 10 |
| Xylène | mg/L | 1 - 5 |
| Phénol | mg/L | 1 - 30 |
| Naphtalène | mg/L | 0,5 - 5 |
| Alcool benzylique | mg/L | 5 - 30 |
| 2-methyl phenol | mg/L | 1 - 5 |
| 3-methyl phenol | mg/L | 1 - 5 |
| 4-methyl phenol | mg/L | 1 - 5 |
| COT | mg/L | 20 - 150 |

En termes de performances de traitement, l'ultrafiltration a permis de réduire la concentration des huiles et des matières en suspension à des niveaux selon le tableau 4 ci-après.

**Tableau 4**

| Composés | Concentration dans l'effluent traité (en mg/l) | Taux d'abattement (en %) |
|---|---|---|
| Hydrocarbures insolubles | 0,2 à 0,5 | 99 à 99, 96 |
| Matières en suspension | 0,1 à 0,5 | 99 à 99,9 |
| Hydrocarbures polyaromatiques | 20 à 50 | 80 à 90 |

Les résines, quant à elles, ont permis d'obtenir les abattements rassemblés dans le tableau 5 ci-dessous :

**Tableau 5**

| | **Résine 1 (%)** | **Résine 2 (%)** |
|---|---|---|
| Benzène | 99,5 ± 0,5 | 99,9 ± 0,1 |
| Toluène | 99,5 ± 0,5 | 99,9 ± 0,1 |
| Ethylbenzène | 99,5 ± 0,5 | 99,8 ± 0,1 |
| Xylène | 99,5 ± 0,5 | 99,8 ± 0,1 |
| Phénol | 96,5 ± 0,5 | 99,9 ± 0,1 |
| Naphtalène | 99,7 ± 0,3 | 99,9 ± 0,1 |
| Alcool benzylique | 84,0 ± 1,0 | 99,5 ± 0,5 |
| 2-methyl phenol | 99,5 ± 0,5 | 99,9 ± 0,1 |
| 3-methyl phenol | 99,5 ± 0,5 | 99,9 ± 0,1 |
| 4-methyl phenol | 99,5 ± 0,5 | 99,9 ± 0,1 |
| COT | 50,0 ± 5,0 | 85,0 ± 5,0 |

En termes de régénérabilité, les résines ont été régénérées par de la vapeur. Cette régénération a permis le recouvrement des capacités d'adsorption des résines à 80%. En outre, la condensation de la vapeur a permis de séparer les matières organiques adsorbées sur la première résine. Les conditions et les résultats de cette régénération sont indiqués dans le tableau 6 suivant.

**Tableau 6**

| Durée de cycle | 7 jours |
|---|---|
| Caractéristique de la vapeur | Résine 1 : 125°C à 2.4 bar |
| | Résine 2 : 150°C à 5.0 bar |
| % de matière valorisée | 99% ± 1 |

La régénération à l'éthanol a permis d'obtenir les mêmes performances que celle à la vapeur, en termes de recouvrement des capacités d'adsorption et des taux de matières organiques valorisables après l'évaporation et la récupération de l'éthanol.

Avec le mode de régénération combinant la vapeur comme média de régénération et de l'éthanol, un cycle sur dix cycles de régénération, a montré une meilleure performance en termes de taux de recouvrement de la capacité d'adsorption des résines, celle-ci se trouvant augmentée et atteignant 95%.

L'unité de filtration par osmose inverse 5 comprend des membranes en composite polyamide. Elles présentent l'avantage d'avoir un faible colmatage et de pouvoir résister à des températures allant jusqu'à 85°C. Cette unité comprend ici deux étages montés en cascade. Elle pourrait comprendre un seul étage fonctionnant en double passe. Le nombre d'étages ou de passes pourrait être supérieur. L'eau traitée provenant de l'unité de filtration par osmose inverse est recueillie par la canalisation 51 par exemple en vue de sa réutilisation en tant qu'eau industrielle, par exemple pour produire de la vapeur. Les déchets en provenant sont évacués par la canalisation 52. L'osmose inverse permet d'abattre l'alcalinité, la salinité, la dureté, la silice et le Bore.

Le comportement de l'osmose inverse en termes de fréquence de nettoyage est semblable aux cas classiques de dessalement par osmose inverse à température ambiante.

Le taux de conversion (débit du perméat/débit d'alimentation) de l'unité d'osmose inverse en utilisant une configuration double étage atteint 83%.

La pression nécessaire, avec une salinité de 20 000 mg/L, pour un taux de conversion de 83% en configuration double étages à 60°C est de 25 bar au lieu de 46 à 50 bar pour 25°C.

La qualité de l'eau obtenue en configuration simple passe d'osmose inverse est rassemblée dans le tableau 7 suivant.

**Tableau 7**

| Paramètres | mg/L |
|---|---|
| Salinité | 70 - 450 |
| Alcalinité | 10 - 40 mg/L CaCO₃ |
| Dureté | 3 - 30 mg/L CaCO₃ |
| Silice | 0,8 - 6,5 |

La qualité de l'eau obtenue en configuration double passes d'osmose inverse est rassemblée dans le tableau 8 suivant.

**Tableau 8**

| Paramètres | mg/L |
|---|---|
| Salinité | 10 - 12 |
| Alcalinité | 0,3 - 1 mg/L CaCO₃ |
| Dureté | 0,1 - 0,15 mg/L CaCO₃ |
| Silice | 0,02 - 0,15 |

## Revendications

1. Procédé de traitement d'eaux provenant des industries pétrolières ou gazières ou respectivement d'eaux industrielles présentant une température supérieure à 55°C et inférieure ou égale à 98°C, lesdites eaux contenant de la matière organique, ledit procédé comprenant :
- une étape de séparation physique produisant des déchets et un effluent, ladite étape de séparation comprenant une séparation physique ou respectivement une filtration membranaire de type microfiltration ou ultrafiltration menée sur au moins une membrane choisie dans le groupe constitué par les membranes immergées en polyétrafluoroéthylène (PTFE) et les membranes tubulaires en polyfluorure de vinylidène (PVDF) ;
- une étape d'adsorption d'au moins une partie de ladite matière organique présent dans ledit effluent sur au moins une résine adsorbante choisie dans le groupe comprenant les résines réticulées non ionisées et les résines charbonnées microporeuses ;
- une étape de filtration par osmose inverse en aval de ladite étape d'adsorption.

2. Procédé selon la revendication 1, **caractérisé en ce que** ladite étape de séparation physique est une filtration membranaire.

3. Procédé selon la revendication 2, **caractérisé en ce que** ladite filtration membranaire est de type microfiltration ou ultrafiltration menée sur au moins une membrane choisie dans le groupe constitué par les membranes immergées ou sous pression en polyétrafluoroéthylène (PTFE) et les membranes tubulaires en polyfluorure de vinylidène (PVDF).

4. Procédé selon l'une quelconque des revendications 1 à 3, **caractérisé en ce que** ladite étape d'osmose inverse est menée sur au moins une membrane en composite polyamide.

5. Procédé selon l'une quelconque des revendications 1 à 4, **caractérisé en ce que** lesdites eaux sont des eaux de production des champs pétroliers ou gaziers.

6. Procédé selon la revendication 5, **caractérisé en ce que** lesdites eaux présentent :
- une concentration en hydrocarbures insolubles comprise entre 1 et 3 000 mg/L ;
- une concentration en matières en suspension comprise entre 90 et 500 mg/L.

7. Procédé selon la revendication 5 ou 6, **caractérisé en ce que** lesdites eaux présentent :
- une salinité comprise entre 500 et 37 000 mg/L ;
- une concentration en silice comprise entre 20 et 250 mg/L ;
- une concentration en Bore comprise entre 1 et 80 mg/l.
- une alcalinité comprise entre 80 et 1 000 mg/L de CaCO₃ ;
- une dureté comprise entre 20 et 50 000 mg/L de CaCO₃.

8. Procédé selon l'une quelconque des revendications 1 à 7, **caractérisé en ce que** ladite étape d'adsorption est mise en œuvre sur une résine spécifique dédiée à l'élimination d'un composé cible.

9. Procédé selon l'une quelconque des revendications 1 à 7, **caractérisé en ce que** ladite étape d'adsorption est mise en œuvre sur deux ou plusieurs résines permettant l'élimination d'un ou de plusieurs composés.

10. Procédé selon l'une quelconque des revendications 1 à 9, **caractérisé en ce qu'**il comprend une étape de régénération *in situ* de ladite au moins une résine.

11. Procédé selon la revendication 10, **caractérisé en ce que** ladite étape de régénération est réalisée par un média de régénération choisi dans le groupe constitué par de la vapeur d'eau surchauffée à une température comprise entre 120°C et 200° C, préférentiellement entre 120 °C et 150 °C, un solvant à faible point d'ébullition, une base, un acide, ou par la combinaison de deux ou plusieurs de ces médias de régénération.

12. Procédé selon la revendication 11, **caractérisé en ce que** ledit média de régénération est un solvant à faible point d'ébullition, tel que de l'alcool, et **en ce qu'**il comprend de plus une étape ultérieure de recyclage dudit solvant par évaporation conduisant à l'obtention de deux phases :
- une phase condensée constituée de solvant régénéré apte à être réutilisé lors d'une étape ultérieure de régénération in situ de ladite au moins une résine, et
- une phase organique constituée des matières organiques adsorbées.

13. Procédé selon la revendication 11, **caractérisé en ce que** ledit média de régénération est de la vapeur d'eau, et **en ce qu'**il comprend de plus une étape ultérieure de condensation de ladite vapeur d'eau conduisant à l'obtention de deux phases :
- une phase aqueuse constituée d'eau saturée en composés organiques, et
- une phase organique constituée des matières organiques adsorbées.

14. Procédé selon la revendication 13, **caractérisé en ce qu'**il comprend une étape de traitement de ladite phase aqueuse constituée d'eau saturée en composés organiques consistant à la faire passer sur ladite au moins une résine adsorbante de façon à la dé-saturer en composés organiques et conduisant à une eau apte à être réutilisée lors d'une étape ultérieure de régénération *in situ* de ladite au moins une résine.

15. Procédé selon l'une quelconque des revendications 1 à 14, **caractérisé en ce que** ladite étape de filtration par osmose inverse est suivie d'une étape de récupération desdites eaux en vue de leur réutilisation industrielle.

16. Procédé selon l'une quelconque des revendications 1 à 15, **caractérisé en ce qu'**il comprend une étape de récupération des déchets provenant de ladite séparation physique en vue d'être valorisés.

17. Installation de traitement d'eaux pour la mise en œuvre d'un procédé selon l'une quelconque des revendications 1 à 16, **caractérisée en ce qu'**elle comprend :
- des moyens d'amenée (1) d'eaux industrielles ;
- des moyens de séparation physique (2, 2') comprenant une entrée reliée aux moyens d'amenée (1), et une sortie d'évacuation d'effluents et une sortie d'évacuation de déchets ;
- au moins une colonne (4, 4') logeant au moins une résine adsorbante choisie dans le groupe comprenant les résines réticulées non ionisées et les résines charbonnées microporeuses, ladite colonne (4, 4') comprenant une entrée reliée à la sortie d'évacuation d'effluents desdits moyens de séparation (2, 2') et une sortie d'eaux ;
- au moins une unité de filtration par osmose inverse (5) comprenant une entrée reliée à la sortie d'eaux de ladite colonne (4, 4') et une sortie d'eaux traitées.

18. Installation selon la revendication 17, **caractérisée en ce que** lesdits moyens de séparation physique (2, 2') comprennent au moins une membrane de filtration de type microfiltration ou ultrafiltration choisie dans le groupe constitué par les membranes immergées ou sous pression en polyétrafluoroéthylène (PTFE) et les membranes tubulaires en polyfluorure de vinylidène (PVDF).

19. Installation selon la revendication 17 ou 18, **caractérisée en ce qu'**elle comprend des moyens de régénération (41, 41', 41") de ladite au moins une résine, à l'aide d'au moins un média de régénération choisi dans le groupe constitué par de la vapeur d'eau surchauffée à une température comprise entre 120°C et 200° C, préférentiellement entre 120 °C et 150 °C, un solvant à faible point d'ébullition, une base, un acide, ou par la combinaison de deux ou plusieurs de ces médias de régénération.

20. Installation selon la revendication 19 **caractérisée en ce qu'**elle comprend des moyens de recyclage (61) par évaporation/condensation (6) dudit solvant après sont passage sur ladite au moins une colonne (4, 4').

21. Installation selon la revendication 19 **caractérisée en ce qu'**elle comprend des moyens de condensation de la vapeur d'eau après son passage sur ladite au moins une colonne (4, 4'), des moyens d'acheminement de la phase aqueuse ainsi obtenue en tête de ladite colonne (4, 4'), et des moyens de récupération en pied de celle-ci d'une eau susceptible d'être chauffée pour donner de la vapeur de régénération.

## Patentansprüche

1. Verfahren zum Behandeln von Wässern, die aus der Erdöl- oder Gasindustrie stammen, beziehungsweise von Industriewässern, die eine Temperatur von mehr als 55 °C und weniger als, oder gleich 98 °C aufweisen, wobei die Wässer organisches Material enthalten, wobei das Verfahren Folgendes umfasst:
- einen physikalischen Trennungsschritt, der Abfälle und ein Abwasser erzeugt, wobei der Trennungsschritt eine physikalische Trennung beziehungsweise eine Membranfilterung in der Art einer Mikrofilterung oder Ultrafilterung umfasst, die auf mindestens einer Membran durchgeführt wird, die aus der Gruppe ausgewählt wird, die durch die Tauchmembrane aus Polyetraflorethylen (PTFE) und die Rohrmembrane aus Polyvinylidenfluorid (PVDF) gebildet wird;
- einen Adsorptionsschritt mindestens eines Teils der organischen Stoffe, die in dem Abwasser vorhanden sind, auf mindestens einem adsorbierenden Harz, das aus der Gruppe ausgewählt wird, die die nicht ionisierten vernetzten Harze und die mikroporösen verkohlten Harze umfasst;
- einen Filterungsschritt durch Umkehrosmose stromabwärts des Adsorptionsschrittes.

2. Verfahren nach Anspruch 1, **dadurch gekennzeichnet, dass** der physikalische Trennungsschritt eine Membranfilterung ist.

3. Verfahren nach Anspruch 2, **dadurch gekennzeichnet, dass** die Membranfilterung in der Art einer Mikrofilterung oder Ultrafilterung ist, die auf mindestens einer Membran durchgeführt wird, die aus der Gruppe ausgewählt wird, die durch die Tauch- oder unter Druck stehenden Membrane aus Polyetraflorethylen (PTFE) und die Rohrmembrane aus Polyvinylidenfluorid (PVDF) gebildet wird.

4. Verfahren nach einem der Ansprüche 1 bis 3, **dadurch gekennzeichnet, dass** der Umkehrosmoseschritt auf mindestens einer Membran aus Polyamidverbundwerkstoff ausgeführt wird.

5. Verfahren nach einem der Ansprüche 1 bis 4, **dadurch gekennzeichnet, dass** die Wässer Produktionswässer aus den Öl- oder Gasfeldern sind.

6. Verfahren nach Anspruch 5, **dadurch gekennzeichnet, dass** die Wässer Folgendes aufweisen:
- eine Konzentration an unlöslichen Kohlenwasserstoffen zwischen 1 und 3 000 mg/L;
- eine Konzentration an Schwebestoffen zwischen 90 und 500 mg/L.

7. Verfahren nach Anspruch 5 oder 6, **dadurch gekennzeichnet, dass** die Wässer Folgendes aufweisen:
- einen Salzgehalt zwischen 500 und 37 000 mg/L;
- eine Konzentration an Kieselsäure zwischen 20 und 250 mg/L;
- eine Konzentration an Bor zwischen 1 und 80 mg/l.
- eine Alakalität zwischen 80 und 1000 mg/L an CaCO₃;
- eine Härte zwischen 20 und 50 000 mg/L an CaCO₃.

8. Verfahren nach einem der Ansprüche 1 bis 7, **dadurch gekennzeichnet, dass** der Adsorptionsschritt auf einem spezifischen Harz angewandt wird, das der Eliminierung einer Zielverbindung gewidmet ist.

9. Verfahren nach einem der Ansprüche 1 bis 7, **dadurch gekennzeichnet, dass** der Adsorptionsschritt auf zwei oder mehreren Harzen angewandt wird, die die Eliminierung einer oder mehrerer Verbindungen ermöglichen.

10. Verfahren nach einem der Ansprüche 1 bis 9, **dadurch gekennzeichnet, dass** es einen Regenerierungsschritt *in situ* des mindestens einen Harzes umfasst.

11. Verfahren nach Anspruch 10, **dadurch gekennzeichnet, dass** der Regenerierungsschritt durch ein Regenerierungsmedium durchgeführt wird, das aus der Gruppe ausgewählt wird, die durch auf eine Temperatur zwischen 120 °C und 200 °C, vorzugsweise zwischen 120 °C und 150 °C überhitzten Wasserdampf, ein Lösungsmittel mit niedrigem Siedepunkt, eine Base, eine Säure oder durch die Kombination von zwei oder mehreren dieser Regenerierungsmedien gebildet ist.

12. Verfahren nach Anspruch 11, **dadurch gekennzeichnet, dass** das Regenerierungsmedium ein Lösungsmittel mit niedrigem Siedepunkt, wie Alkohol ist, und dadurch, dass es weiter einen späteren Schritt des Recycelns des Lösungsmittels durch Verdampfen umfasst, der zum Erhalt von zwei Phasen führt:
- eine kondensierte Phase, bestehend aus regeneriertem Lösungsmittel, das imstande ist, in einem späteren Regenerierungsschritt in situ des mindestens einen Harzes wiederverwendet zu werden, und
- eine organische Phase bestehend aus den adsorbierten organischen Stoffen.

13. Verfahren nach Anspruch 11, **dadurch gekennzeichnet, dass** das Regenerierungsmedium Wasserdampf ist, und **dadurch gekennzeichnet, dass** es weiter einen späteren Kondensierungsschritt des Wasserdampfs umfasst, der zum Erhalt von zwei Phasen führt:
- eine wässrige Phase, bestehend aus mit organischen Verbindungen gesättigtem Wasser, und
- eine organische Phase bestehend aus den adsorbierten organischen Stoffen.

14. Verfahren nach Anspruch 13, **dadurch gekennzeichnet, dass** es einen Behandlungsschritt der wässrigen Phase bestehend aus mit organischen Verbindungen gesättigtem Wasser umfasst, der darin besteht, es auf das mindestens eine adsorbierende Harz laufen zu lassen, um es von den organischen Verbindungen zu entsättigen und was zu einem Wasser führt, das imstande ist, bei einem späteren Regenerierungsschritt *in situ* des mindestens einen Harzes wiederverwendet zu werden.

15. Verfahren nach einem der Ansprüche 1 bis 14, **dadurch gekennzeichnet, dass** auf den Filterungsschritt durch Umkehrosmose ein Schritt zur Rückgewinnung der Wässer in Hinblick auf deren industrielle Wiederverwendung folgt.

16. Verfahren nach einem der Ansprüche 1 bis 15, **dadurch gekennzeichnet, dass** es einen Wiedergewinnungsschritt der aus der physikalischen Trennung stammenden Abfälle in Hinblick auf deren Verwertung umfasst.

17. Wasserbehandlungsanlage zum Anwenden eines Verfahrens nach einem der Ansprüche 1 bis 16, **dadurch gekennzeichnet, dass** sie Folgendes umfasst:
- Mittel zum Zuführen (1) von Industriewässern;
- Mittel zur physikalischen Trennung (2, 2'), umfassend einen Einlauf, der mit den Mitteln zum Zuführen (1) verbunden ist, und einen Auslauf zum Ausbringen von Abwasser und einen Auslauf zum Ausbringen von Abfällen;
- mindestens eine Säule (4, 4'), die mindestens ein adsorbierendes Harz aufnimmt, das aus der Gruppe ausgewählt wird, die die nicht ionisierten vernetzten Harze und die mikroporösen verkohlten Harze umfasst, wobei die Säule (4, 4') einen Einlauf, der mit dem Auslauf zum Ausbringen von Abwässern aus den Mitteln zur Trennung (2, 2') verbunden ist, und einen Wasserauslauf umfasst;
- mindestens eine Filterungseinheit durch Umkehrosmose (5), einen Einlauf, der mit dem Wässerauslauf aus der Säule (4, 4') verbunden ist, und einen Auslauf für behandelte Wässer umfassend.

18. Anlage nach Anspruch 17, **dadurch gekennzeichnet, dass** die Mittel zur physikalischen Trennung (2, 2') mindestens eine Filterungsmembran in der Art einer Mikrofilterung oder Ultrafilterung umfasst, die aus der Gruppe ausgewählt wird, die durch Tauch- oder unter Druck stehende Membrane aus Polyetraflorethylen (PTFE) und die Rohrmembrane aus Polyvinylidenfluorid (PVDF) gebildet wird.

19. Anlage nach Anspruch 17 oder 18, **dadurch gekennzeichnet, dass** sie Regenerierungsmittel (41, 41', 41") des mindestens einen Harzes mithilfe mindestens einen Regenerierungsmediums umfasst, das aus der Gruppe ausgewählt wird, die durch auf eine Temperatur zwischen 120 °C und 200 °C, vorzugsweise zwischen 120 °C und 150 °C überhitzten Wasserdampf, ein Lösungsmittel mit niedrigem Siedepunkt, eine Base, eine Säure oder durch die Kombination von zwei oder mehreren dieser Regenerierungsmedien gebildet ist.

20. Anlage nach Anspruch 19, **dadurch gekennzeichnet, dass** sie Recyclingmittel (61) durch Verdampfen/Kondensieren (6) des Lösungsmittels nach dessen Durchlauf auf der mindestens einen Säule (4, 4') umfasst.

21. Anlage nach Anspruch 19, **dadurch gekennzeichnet, dass** sie Mittel zum Kondensieren des Wasserdampfs nach dessen Durchlauf auf der mindestens einen Säule (4, 4'), Mittel zum Zuführen der so am Kopf der Säule (4, 4') erhaltenen wässrigen Phase, Mittel zum Rückgewinnen am Fuße derselben eines Wassers, das erhitzt werden kann, umfasst, um Regenerierungsdampf zu ergeben.

## Claims

1. Method for treating industrial water from the petroleum or gas industries or respectively industrial water having a temperature higher than 55°C and lower than or equal to 98°C, said water containing organic matter, said method comprising:
- a step of physical separation producing wastes and an effluent, said step comprising a physical separation step or respectively a membrane separation step of a microfiltration or ultrafiltration type conducted on at least one membrane chosen from the group constituted by the immersed membranes or pressurized membranes made of polytetrafluoroethylene (PTFE) and the tubular membranes made of polyvinylidene fluoride (PVDF);
- a step of adsorption of at least one part of said organic matter present in said effluent on at least one adsorbent resin chosen from the group comprising the non-ionized reticulated resins and the microporous carbonated resins;
- a step of reverse osmosis filtration downstream from said adsorption step.

2. Method according to claim 1, **characterized in that** said step of physical separation is membrane filtration.

3. Method according to claim 2, **characterized in that** said membrane filtration is of a microfiltration or ultrafiltration type conducted on at least one membrane chosen from the group constituted by the immersed membranes or pressurized membranes made of polytetrafluoroethylene (PTFE) and the tubular membranes made of polyvinylidene fluoride (PVDF).

4. Method according to any one of the claims 1 to 3, **characterized in that** said step of reverse osmosis is carried out on at least one membrane made of polyamide composite.

5. Method according to any one of the claims 1 to 4, **characterized in that** said water is production water from petroleum or gas fields.

6. Method according to claim 5, **characterized in that** said water shows:
- a concentration in insoluble hydrocarbons of 1 to 3 000 mg/L;
- a concentration in matter in suspension of 90 to 500 mg/L.

7. Method according to claim 5 or 6, **characterized in that** said water has:
- salinity of 500 to 37 000 mg/L;
- a concentration in silica of 20 to 250 mg/L;
- a concentration in boron of 1 to 80 mg/l;
- an alkalinity of 80 to 1 000 mg/L of CaCO₃;
- a hardness of 20 to 50 000 mg/L of CaCO₃.

8. Method according to any one of the claims 1 to 7, **characterized in that** said step of adsorption is implemented on a specific resin dedicated to the elimination of a target compound.

9. Method according to any one of the claims 1 to 7, **characterized in that** said step of adsorption is implemented on two or more resins enabling the elimination of one or more compounds.

10. Method according to any one the claims 1 to 9, **characterized in that** it comprises a step of in-situ regeneration of said at least one resin.

11. Method according to claim 10, **characterized in that** said step of regeneration is carried out by a regeneration medium chosen from the group constituted by superheated steam at a temperature ranging from 120°C to 200° C, preferably from 120°C to 150°C, a solvent with a low boiling point, a base, an acid, or a combination of two or more of these regeneration media.

12. Method according to claim 11, **characterized in that** said regeneration medium is a solvent with a low boiling point, such as alcohol, and **in that** it furthermore comprises a subsequent step for recycling said solvent by means of evaporation leading to the obtaining of two phases:
- a condensed phase constituted by a regenerated solvent capable of being reused during a subsequent step of in-situ regeneration of said at least one resin, and
- an organic phase constituted by adsorbed organic matter.

13. Method according to claim 11, **characterized in that** said regeneration medium is steam, and **in that** it additionally comprises a subsequent step of condensation of said steam leading to the obtaining of two phases:
- an aqueous phase constituted by water saturated in organic compounds, and
- an organic phase constituted by adsorbed organic matter.

14. Method according to claim 13, **characterized in that** it comprises a step for treating said aqueous phase constituted by water saturated in organic compounds consisting in making it pass on said at least one adsorbent resin so as to de-saturate it of organic compounds and leading to water that can be reutilized during a subsequent step of in-situ regeneration of said at least one resin.

15. Method according to any one of the claims 1 to 14, **characterized in that** said step of filtration by reverse osmosis is followed by a step of recovery of said water for its industrial re-utilization.

16. Method according to any of the claims 1 to 15, **characterized in that** it comprises a step for recovering wastes coming from said step of physical separation in order to reutilize these wastes.

17. Plant for treating water for the implementing of a method according to any one of the claims 1 to 16, **characterized in that** it comprises:
- means (1) for leading in industrial water;
- means of physical separation (2, 2') comprising an inlet connected to the means for leading in (1) and an outlet for discharging effluents and an outlet for discharging wastes;
- at least one column (4, 4') housing at least one adsorbent resin chosen from the group comprising the non-ionized reticulated resins and the microporous carbonated resins, said column (4, 4') comprising an inlet connected to the outlet for discharging effluents from said means of separation (2, 2') and an outlet for water;
- at least one unit for filtration by reverse osmosis (5) comprising an inlet connected to the outlet of water from said column (4, 4') and an outlet of treated water.

18. Plant according to claim 17 **characterized in that** said means of physical separation (2, 2') comprise at least one microfiltration or ultrafiltration type of filtration membrane chosen from the group constituted by the immersed or pressurized membranes made of polytetrafluoroethylene (PTFE) and tubular membranes made of polyvinylidene fluoride (PVDF).

19. Plant according to claim 17 or 18 **characterized in that** it comprises means (41, 41', 41") for regenerating said at least one resin by means of a regeneration medium chosen from the group constituted by superheated steam at a temperature of 120°C to 200° C, preferably 120°C to 150°C, a solvent with a low boiling point, a base, an acid, or by the combination of two or more of these regeneration media.

20. Plant according to claim 19, **characterized in that** it comprises means for recycling said solvent (61) by evaporation/condensation (6) after it has passed through said at least one column (4, 4').

21. Plant according to claim 19, **characterized in that** it comprises means for condensation of steam after it has passed through at least one column (4, 4'), means for conveying the aqueous phase thus obtained at the head of said column (4, 4'), and means for the recovery, at the foot of this column, of water capable of being heated to give regeneration steam.
